# EUROPÄISCHE PATENTANMELDUNG

(11) **EP 0 597 140 A1**
(43) Veröffentlichungstag der Anmeldung: **18.05.1994**
(21) Anmeldenummer: 92119189.6
(22) Anmeldetag: 10.11.1992
(51) Int. Cl.: B60N 2/46

(54) **Fahrgaststiz-Armlehne**

(71) Anmelder: Ignaz Vogel GmbH & Co KG, Fahrzeugsitze, D-76228 Karlsruhe (DE)
(72) Erfinder: Vogel, Ignaz, W-7500 Karlsruhe 41 - Stu. (DE)
(74) Vertreter: Trappenberg, Hans

(57) **Zusammenfassung**

Um die an komfortablen Fahrgastsitzen vorgesehene Armlehne aus dem Bereich der Platz nehmenden Passagiere zu entfernen, wird vorgeschlagen, die Armlehne so anzubringen, daß sie insgesamt an einem seitlich angeordneten Armlehnenträger nach unten in Höhe des Sitzpolsters zu verschieben ist.

## Beschreibung

Die Erfindung betrifft eine aus dem Bereich der Platz nehmenden Fahrgäste entfernbare Armlehne an Fahrgastsitzen.

Insbesondere bei komfortabel ausgestatteten Fahrzeugen, die dem Transport von Fahrgästen dienen, wie Schiffen, Flugzeugen, insbesondere aber Autobussen, sind die Fahrgastsitze mit Armlehnen ausgestattet. Diese Armlehnen sind zwar während der Fahrt recht komfortabel, stören jedoch beim Platz nehmen beziehungsweise beim Verlassen des Sitzplatzes und behindern gegebenfalls auch das Ablegen von Gepäckstücken.

Dieser Nachteil der Armlehnen wurde schon rechtzeitig erkannt und es wurden Mechanismen vorgesehen, um die Armlehen aus dem Bereich der Platz nehmenden Passagiere zu entfernen, sie jedoch nach dem Platznehmen wieder sicher in die Gebrauchslage zu führen und dort zu halten. Insbesondere hat sich hierbei ein Mechanismus durchgesetzt, der die an einem hochstrebenden Armlehnenträger um eine horizontal angebrachte Achse verschwenkbare Armlehne halten, wobei die Armlehne sowohl nach oben wie gegebenenfalls nach oben und nach unten weggeschwenkt werden kann. Hierbei ist eine Feststellvorrichtung in der Gebrauchslage vorgesehen, die von dem Passagier zum Wegschwenken der Armlehne gelöst werden muß. So gut diese Konstruktion auch ist und so gut sie sich bewährt hat, hängt ihr doch der Nachteil an, daß die hoch- oder heruntergeklappten Armlehnen den Raum seitlich der Fahrgastsitze einengen, was sich insbesondere beim Durchgang zwischen den Sitzen störend bemerkbar macht.

Aufgabe der Erfindung ist es daher, eine Armlehne anzugeben, die diesen seitlichen Raum zumindest bis zur Sitzhöhe des Fahrgastsitzes nicht einengt. Erreicht wird dies in erfindungsgemäßer Weise durch einen etwa vertikal verlaufenden Armlehnenträger, der in einem am Fahrgastsitz angebrachten Schiebelager mitsamt der Armlehne bis auf Sitzhöhe verschiebbar ist oder durch einen in gleicher Weise angeordneten Armlehnenträger, an dem die Armlehne über ein Schiebelager bis auf Sitzhöhe verschiebbar gelagert ist. In beiden Fällen wird also die Armlehne nicht seitlich an die Rükkenlehne des Fahrgastsitzes angeklappt, sondern sie wird vollkommen nach unten weggeschoben, so daß der Seitenbereich vollkommen frei bleibt. Diese Konstruktion hat zudem noch den Vorteil, daß die Höhenlage der Armlehne durch entsprechende Feststelleinrichtungen den individuellen Bedürfnissen des jeweiligen Passagiers angepaßt werden kann.

Um das Verschieben der Armlehne zu erleichtern, kann, etwa parallel zum Armlehnenträger verlaufend, eine auf die Armlehne (den Armlehnenträger) einwirkende, die Armlehne in den Gebrauchszustand hebende Feder angeordnet sein. Ist diese Feder so kräftig, daß sie mit Sicherheit das Armgewicht tragen kann, so können unter Umständen Feststellmittel für die Armlehne entfallen. Im Bedarfsfalle muß die Armlehne dann lediglich gegen die Kraft der Feder niedergedrückt werden, um den Platz zum Ein- und Aussteigen frei zu machen. In der Regel wird jedoch zumindest eine, die Armlehne in der Gebrauchslage haltende Klinke vorgesehen, um ein ungewolltes Ausweichen der Armlehne aus der Gebrauchslage zu verhindern. Selbstverständlich können auch mehrere Klinkenstellungen vorgesehen sein, um das oben schon erwähnte Einstellen der Armlehne in die jeweils gewünschte Höhenlage zu ermöglichen. Eine kontinuierliche Einstellung der Höhenlage ist auch dann gegeben, wenn ein kurzes Schiebelager verwendet wird, in das der Armlehnenträger mit vergrößertem Spiel eingesetzt wird beziehungsweise das mit vergrößertem Spiel den Armlehnenträger umgreift. Dadurch stellt sich der Armlehnenträger beziehungsweise das Schiebelager leicht schräg zu dem Gegenstück, so daß die Armlehne in dieser Höhenlage verbleibt. Erst ein Druck beziehungsweise Zug in der Nähe der Armlehnenstütze läßt ein erneutes Verschieben der Armlehne zu.

Eine sehr komfortable Einstellmöglichkeit der Armlehne ist dadurch gegeben, daß etwa parallel zum Armlehnenträger verlaufend, eine auf die Armlehne (den Armlehnenträger) einwirkende, im gelösten Zustand die Armlehne in den Gebrauchszustand schiebende Feststell-Gasfeder angeordnet ist.

Auf der Zeichnung sind Ausführungsbeispiele des Erfindungsgegenstandes schematisch dargestellt und zwar zeigen:
Fig. 1 Eine Armlehne mit verschiebbarem Armlehnenträger und
Fig. 2 eine auf dem Armlehnenträger verschiebbare Armlehne.

Auf einem Untergestell (1) ist ein Fahrgastsitz (2) mit Rückenlehne (3) und Sitzpolster (4) angebracht. Seitlich des Sitzpolsters (4) befindet sich eine, das Sitzpolster teilweise abdeckende Blende (5).

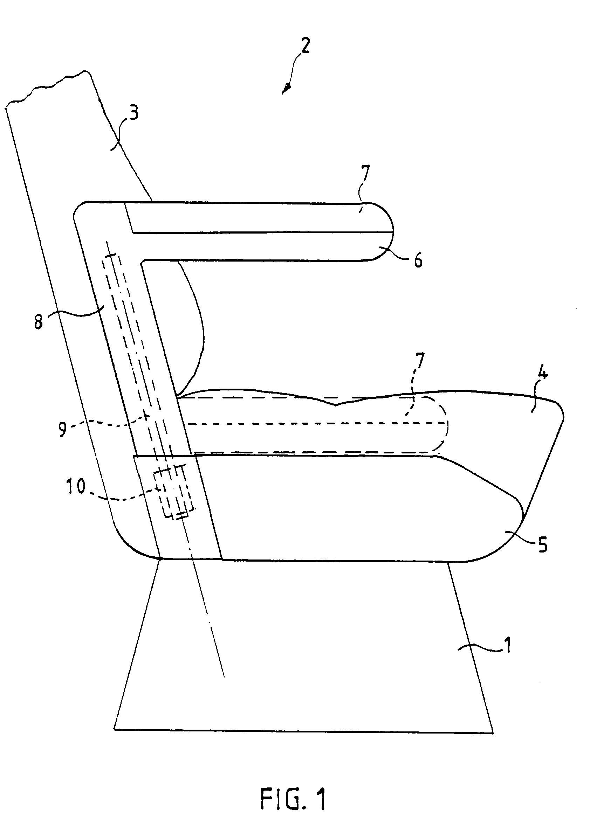

In Fig. 1 ist eine Armlehne (6) mit Polsterung (7) gezeigt, die fest mit einem Armlehnenträger (8) verbunden ist, der über einen integrierten Stab (9) und einem am Fahrgastsitz (2) befestigten Schiebelager (10) nach unten in den Raum des Untergestells (1) verschoben werden kann. Die untere Stellung dieser Armlehne (6) ist gestrichelt dargestellt. Hieraus ist zu erkennen, daß der gepolsterte Teil (7) der Armlehne (6) sich nunmehr in Höhe des Sitzpolsters (4) befindet, praktisch also die Fläche des Sitzpolsters (4) verbreitert.

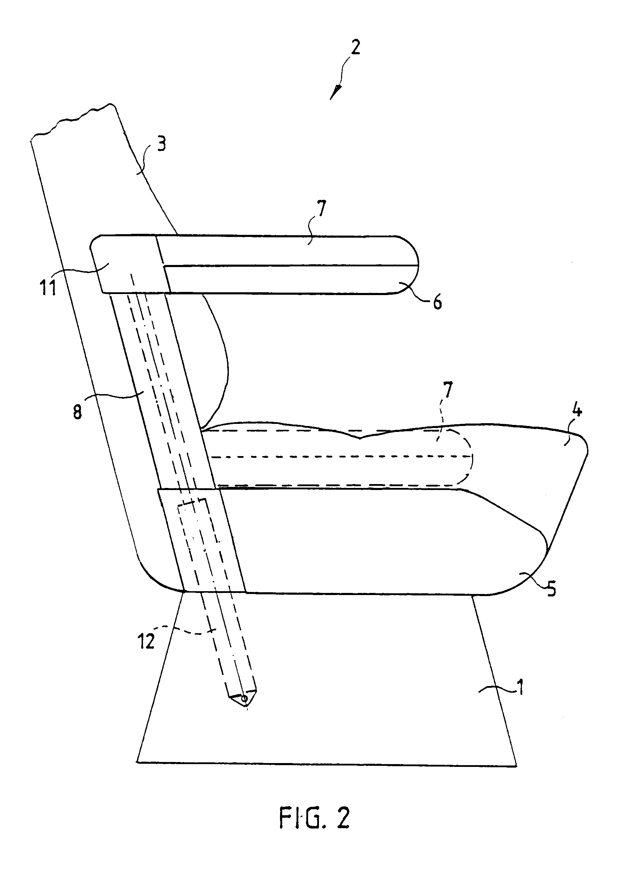

Bei der Ausführung nach Fig. 2 ist an der Armlehne (6) mit Polster (7) eine Schiebebuchse (11) angebracht, die den Armlehnenträger (8) umgreift und auf diese Art und Weise ebenfalls in die untere gestrichelt eingezeichnete Lage verschoben werden kann. Auf die Armlehne (6) wirkt hierbei eine Feststell-Gasfeder (12) ein, so daß die Armlehne in jeder Höhenlage festzustellen ist.

## Patentansprüche

1. Aus dem Bereich der Platz nehmenden Fahrgäste entfernbare Armlehne an Fahrgastsitzen, gekennzeichnet durch einen etwa vertikal verlaufenden Armlehnenträger (8), der in einem am Fahrgastsitz (2) angebrachten Schiebelager (10) mitsamt der Armlehne (6) bis auf Sitzhöhe verschiebbar ist.

2. Aus dem Bereich der Platz nehmenden Fahrgastsitze entfernbare Armlehne an Fahrgastsitzen, gekennzeichnet durch einen etwa vertikal verlaufenden Armlehnenträger (8) an dem die Armlehne (6) über ein Schiebelager (11) bis auf Sitzhöhe verschiebbar gelagert ist.

3. Armlehne nach Anspruch 1 oder 2, dadurch gekennzeichnet, daß etwa parallel zum Armlehnenträger (8) verlaufend, eine auf die Armlehne (6) (den Armlehnenträger (8)) einwirkende, die Armlehne (6) in den Gebrauchszustand schiebende Feder angeordnet ist.

4. Armlehne nach Anspruch 3, dadurch gekennzeichnet, daß am Fahrgastsitz (2) eine die Armlehne (6) (den Armlehnenträger (8)) in der untersten Stellung erfassende lösbare Klinke angebracht ist.

5. Armlehne nach Anspruch 3, dadurch gekennzeichnet, daß am Fahrgastsitz (2) mehrere, die Armlehne (6) (den Armlehnenträger (8))in unterschiedlichen Höhenlagen arretierende, lösbare Klinken angebracht sind.

6. Armlehne nach Anspruch 1 oder 2, dadurch gekennzeichnet, daß etwa parallel zum Armlehnenträger (8) verlaufend, eine auf die Armlehne (6) (den Armlehnenträger (8)) einwirkende, im gelösten Zustand die Armlehne (6) in den Gebrauchszustand schiebende Feststell-Gasfeder (12) angeordnet ist.

7. Armlehne nach Anspruch 1, dadurch gekennzeichnet, daß der Armlehnenträger (8) eine im Schiebelager (10) geführte Stange (9) ist, die von einer bei der Armlehne (6) beginnenden Haube abgedeckt ist.

8. Armlehne nach Anspruch 2, dadurch gekennzeichnet, daß das Schiebelager eine an der Armlehne (6) angebrachte, den Armlehnenträger (8) umgreifende Schiebebuchse (11) ist.
